# EUROPEAN PATENT APPLICATION

(11) **EP 3 312 797 A1**
(43) Date of publication of application: **25.04.2018**
(21) Application number: 16194275.0
(22) Date of filing: 18.10.2016
(51) Int. Cl.: G06T 3/00, G06T 7/55

(54) **VISION SYSTEM AND METHOD FOR A MOTOR VEHICLE**

(71) Applicant: Autoliv Development AB, 447 83 Vårgårda (SE)
(72) Inventor: Medley, Fredrik, 58216 Linköping (SE)
(74) Representative: Müller Verweyen

(57) **Abstract**

A vision system (10) for a motor vehicle comprises an imaging apparatus (11) adapted to capture images from a surrounding of the motor vehicle, and a processing unit (30) adapted to perform image processing of images captured by said imaging apparatus (11). The processing unit (30) is adapted to perform a polar transformation which aligns the epipolar lines to horizontal lines in the captured images, and to perform a structure-from-motion calculation on said transformed images.

## Description

The invention relates to a vision system for a motor vehicle, comprising an imaging apparatus adapted to capture images from a surrounding of the motor vehicle, and a processing unit adapted to perform image processing of images captured by said imaging apparatus. The invention furthermore relates to a corresponding vision method.

Vision systems for motor vehicles are generally known, see for example EP 2 219 133 A1 and US 2010 183192 A1.

For a wide range of image processing procedures it is beneficial to have depth information of objects detected in the captured images, i.e. information about the distance of the detected object to the ego vehicle. One way to obtain such depth information is the calculation of structure-from-motion, where the depth information is calculated from subsequent images of one imaging device or camera. Structure-from-motion is the process of, after moving the imaging apparatus, triangulating the pixels in the captured image to get the distance to them. The distance to the pixels can be used for example to discover raised structure such as barriers along the road.

A vision system calculating structure-from-motion is known for example from US 2014/0161323 A1. However, the calculation of structure-from-motion is demanding with respect to processing and hardware resources. This has so far prohibited its realization in practical vision systems for motor vehicles under cost aspects.

The object of the present invention is to provide a cost-effective, practical vision system and method for a motor vehicle suited for calculating structure-from-motion of captured images.

The invention solves this object with the features of the independent claims.

The invention has realized that in the case of driving forward the epipolar point or vanishing point lies in the middle of the image, at the horizon. The inventive polar transformation will therefore convert rays in the shape of a sun-fan into horizontal lines. The distance of the object to the left edge (corresponding to zero radius) of the transformed image tells the distance from the epipolar point. Objects coming closer move away from the epipolar point, otherwise the ego vehicle would be on collision course.

The idea of the invention is to apply a polar transformation that aligns the epipolar lines to horizontal lines in the transformed image. This is essentially the same operation done in disparity matching of stereo calculation. Therefore, the structure-from-motion calculation is preferably performed by a correlation search on each line of consecutive transformed images. Also preferably, the structure-from-motion calculation essentially uses an algorithm for stereo disparity calculation.

The polar transformation will lead to an image pair that can be fed through a stereo calculation block. The resulting disparity map can advantageously be transformed back, by an inverse polar transformation, into a depth image aligned with the original input image. In other words, the disparity map obtained by the stereo disparity calculation is preferably transformed back into a depth image containing structure-from-motion information of the vehicle environment. The structure-from-motion calculation preferably is performed in a disparity calculation block of the vision system. In this case, the disparity calculation block can be realized in a dedicated hardware device, in particular a Field Programmable Gate Array FPGA, an Application Specific Integrated Circuit ASIC or as part of a System-on-Chip SoC device.

To be able to triangulate, the relative motion between the imaging apparatus and the target need to be known. This means, in practice, that reliable results for structure-from-motion are possible only on stationary objects. Preferably, therefore, the processing unit is adapted to detect moving objects, like moving other vehicles, pedestrians, motorcycles or bicycles, in the captured images, and to discard moving objects in the structure-from-motion calculation. The detection of moving objects in the captured images is for example based on image processing. Given the task of structure-from-motion on a stationary scene, the task then is reduced to searching for pixels on the epipolar lines.

Preferably, a condition of driving straight forward is monitored, and the structure-from-motion is performed only if the condition of driving straight forward is met. The monitoring of the condition of driving straight forward can be based on sensor input available from the vehicle data bus, for example from a steering wheel angle sensor or an acceleration sensor. However, the invention is not strictly limited to driving straight, because it is possible to modify the polar transformation to the general case including turning of the vehicle.

In case of a mono imaging apparatus, the disparity calculation block can be time shared between structure-from-motion calculation and a calculation of one-dimensional optical flow of captured images. That is, the optical flow calculation, like the structure-from-motion calculation, also uses the algorithm of the stereo disparity calculation in the disparity calculation block. Therefore, the stereo code can advantageously be used both for the structure-from-motion calculation and the optical flow calculation. In a preferred embodiment, the optical flow in the horizontal direction, often to be approximated by the baseline direction, is calculated by a correlation search on each line of consecutive images. Since the structure-from-motion calculation and the optical flow calculation can advantageously be performed in one and the same dedicated hardware device, significant savings regarding computing and hardware resources are possible.

In a stereo imaging apparatus time sharing can be done between one or more algorithms out of structure-from-motion calculation on any of the imaging devices, stereo disparity calculation, and one-dimensional optical flow on any of the imaging devices.

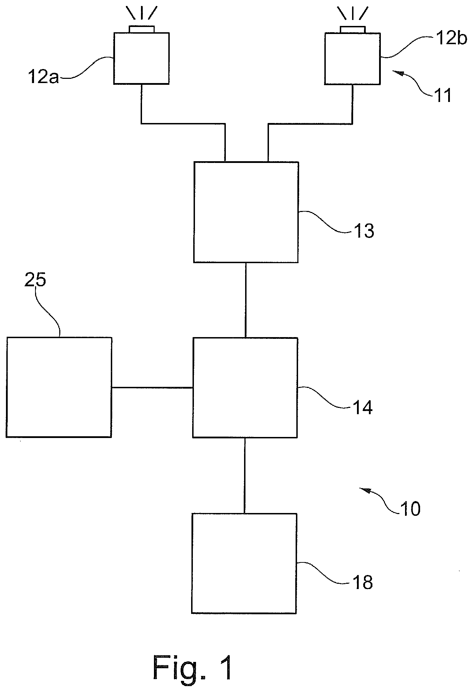

In the following the invention shall be illustrated on the basis of preferred embodiments with reference to the accompanying drawings, wherein
- Fig. 1: shows a schematic view of a vision system for a motor vehicle;
- Fig. 2: shows a detailed schematic view of part of the vision system of Fig. 1 in one embodiment;
- Fig. 3: shows a flow diagram illustrating the structure-from-motion calculation pipeline;
- Fig. 4: shows a schematic drawing of a polar transformation used in the structure-from-motion calculation;
- Fig. 5: shows a schematic drawing illustrating the effect of structure-from-motion warping in case of driving forward;
- Fig. 6: shows a flow diagram illustrating the stereo disparity calculation pipeline;
- Fig. 7: shows a flow diagram illustrating the optical flow calculation pipeline; and
- Fig. 8: shows a table illustrating the memory usage and calculation switching for an imaging apparatus using different exposure levels.

The vision system 10 is mounted in a motor vehicle and comprises an imaging apparatus 11 for capturing images of a region surrounding the motor vehicle, for example a region in front of the motor vehicle. Preferably the imaging apparatus 11 comprises a plurality of optical imaging devices 12, in particular cameras, thus forming a stereo imaging apparatus 11, preferably operating in the visible and/or infrared wavelength range, where infrared covers near IR with wavelengths below 5 microns and/or far IR with wavelengths beyond 5 microns.

The imaging apparatus 11 is coupled to a data processing device 14 adapted to process the image data received from the imaging apparatus 11. The data processing device 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25.

The vision system 10 comprises a dedicated hardware device 13, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or aligning pairs of left/right images into alignment and/or creating disparity or depth images.

The processing device 14 and the dedicated hardware device 13 together form a processing unit 30.

The data processing device 14, or part of its functions, can be realized by a System-On-Chip (SoC) device comprising, for example, FPGA, DSP, ARM and/or microprocessor functionality. The hardware device 13, data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of driver assistance device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one driver assistance device 18 depending on an estimation performed with respect to a tracked object, for example on an estimated collision probability. The driver assistance device 18 may in particular comprise a display device to display information relating to a detected object. However, the invention is not limited to a display device. The driver assistance device 18 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as braking or steering control devices.

The memory device 25 comprises data areas 26 and 27 for storing the image data of the (N-1)th or last-before-current time frame and the image data of the N-th or current time frame. This is different from prior art vision systems where only the image data of the respective current time frame is stored in memory, but the image data of the last-before-current time frame is not kept in the system. The images stored in the memory device 25 need not be un-processed raw image data, but preferably are processed images which in particular may have a reduced size as compared to the raw image data. The images stored in the memory device 25 may for example be aligned images output by the alignment section 15, pre-processed images output by the pre-calculation sections 16a, 16b, or images otherwise suitably modified and/or scaled. This allows performing the structure-from-motion calculation, to be explained later, on down-sampled images of reduced size which contributes to saving significant processing resources.

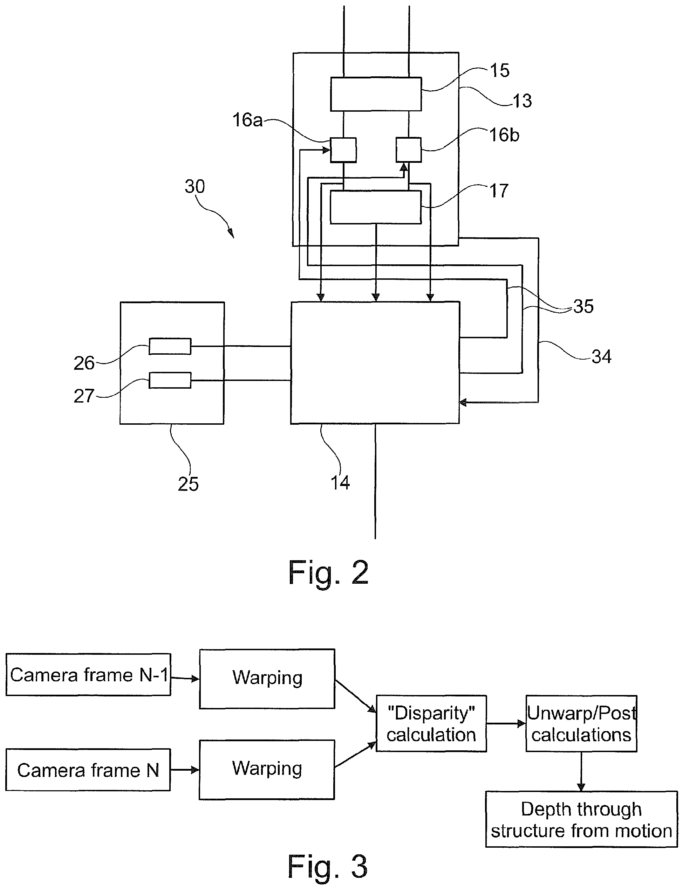

The structure-from-motion calculation is explained in the following on the basis of Figure 2 to 5. The structure-from-motion calculation is performed in the dedicated hardware device 13. The hardware device 13 preferably controls the processing device 14, in particular video ports thereof, via one or more control lines 34, to continuously read the image data of the (N-1) -th and N-th frames out from the memory device 25 and input them into the hardware device 13 via data lines 35. That is, when the structure-from-motion is to be calculated in the hardware device 13, the image data of the (N-1)-th and N-th frames are streamed back into the hardware device 13 through the data lines 35 as controlled by the hardware device 13 through the control line 34. As mentioned above, preferably, down-sampled images of reduced size are streamed back into the hardware device 13 for structure-from-motion calculation which contributes to saving significant processing resources.

The pre-calculation sections 16a, 16b are adapted to perform suitable pre-calculations on the image data of the (N-1)-th and N-th frames, respectively. This may comprise for example horizontal shifting of one of the images; pitch correction; and/or compensation for movement of the vehicle in particular in the lower part of the image. In order to perform the above described functions, the pre-calculation sections 16a, 16b preferably use ego motion data, like kinematic data, provided on a vehicle data bus.

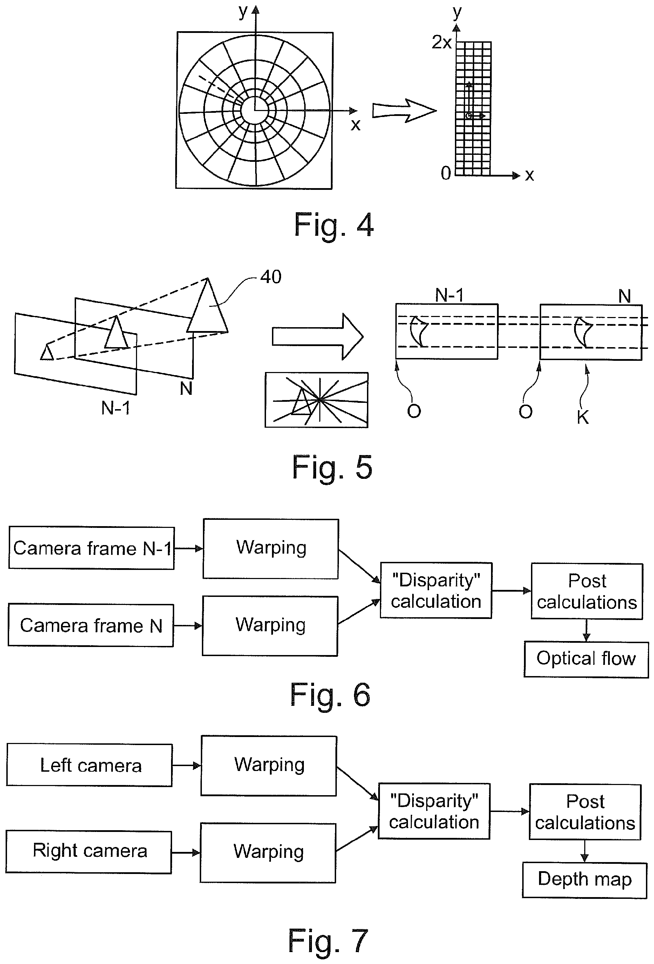

The pre-calculation in the pre-calculation sections 16a, 16b in particular comprises warping (see Figure 3), where warping means performing a polar transformation which aligns epipolar image lines (left diagram in Figure 4) to horizontal image lines (right diagram in Figure 4). The polar transformation or warping is symbolized in Figure 4 by an arrow from the left to the right diagrams.

The effect of the polar transform or warping on an object detected in the images is illustrated in Figure 5. A for example triangular object 40 in the environment of the motor vehicle is captured by an imaging device 12 of the imaging apparatus 11 and thus detected in the (N-1)th and the Nth image frame. Since, under the assumption that the vehicle moves straight forward, a detected object "moves" along radial lines from one image frame to the other, through the polar transformation, the object appears in the same horizontal lines but at different columns of the transformed images, see right side of Figure 5. More specifically, the left edge in the transformed images denoted "0" in Figure 5 corresponds to the vanishing point or center in the captured images. The larger the distance of the object from the vanishing point in the captured images, the further to the right (higher column number) the object appears in the transformed image. For example, the object appearing in row number "k" in the transformed image belonging to the Nth frame on the right side of Figure 5 is further away from the image center than in the transformed image belonging to the (N-1) th frame.

Valuable information can be obtained by performing a horizontal correlation search between consecutive images, or image frames, of the transformed images from one imaging device 12 (see right side of Figure 5). For this purpose, the hardware device 13 comprises a stereo disparity calculation block 17 performing a correlation search on each line of consecutive transformed images. The algorithm of the stereo disparity calculation block 17 used for this structure-from-motion calculation is essentially a stereo disparity calculation algorithm, with a few advantageous adaptations as discussed above. The structure-from-motion calculation is performed on down-sampled images of reduced size as compared to the raw image data, which contributes to saving significant processing resources.

The output of the stereo disparity calculation block 17 undergoes some suited post-calculations (see Figure 3) in order to obtain the final structure-from-motion data. These post-calculations may comprise for example the horizontal shift-back due to the image having been horizontally shifted in one of the pre-calculation sections 16a, 16b. This shift-back operation may for example be performed by a subtraction of a constant from the disparity value that corresponds to the shift in the pre-calculation.

In particular, the post-calculations comprise an unwarping step, where the disparity map output by the stereo disparity calculation block 17 is warped back (by an inverse polar transformation) into a depth image aligned with the original input image. The depth image comprises depth information of the images captured by the respective imaging device 12 including distance of the ego vehicle to the detected object 40.

Although it may be preferred for the hardware device 13 to use the memory device 25 associated with the processing device 14 for storing the image data of the (N-1)-th and N-th frames, this is not mandatory. In another embodiment not shown in the Figures, a separate memory device to store the image data of the (N-1)-th and N-th frames may be associated directly to the hardware device 13, which may allow a quicker fetching of the image data from the memory device.

In another preferred embodiment not shown in the Figures, the pre-calculation sections 16a, 16b may be realized in the processing device 14. The processing device 14 creates images where the above mentioned compensations have been performed, and then streams these data to the hardware device 13 where the structure-from-motion calculation takes place. In this case, pre-processed images are streamed to the hardware device 13 in at least one channel, preferably both channels.

In a mono imaging apparatus 11 with one imaging device 12, preferably time sharing of the stereo disparity calculation block 17, or more generally of the hardware device 13, can be performed between the above described structure-from-motion calculation and a calculation of one-dimensional optical flow of captured images. The stereo disparity calculation block 17 is adapted to calculate the optical flow in one direction, for example the horizontal direction, only, of the captured images, but not in the other, for example vertical, direction. The algorithm of the optical flow calculation is essentially the same as the algorithm used in the structure-from-motion calculation. As regards details on the calculation of one-dimensional optical flow with stereo disparity calculation block 17, the European patent application No. 16189913.3 of the applicant is incorporated herein by reference. In Figure 6 the general scheme of the one-dimensional optical flow calculation is shown. Herein, the "Disparity" calculation has been set in apostrophes indicating that essentially a stereo disparity calculation algorithm is used for the one-dimensional optical flow calculation.

In a stereo imaging apparatus 11 with left and right imaging devices 12, preferably time sharing of the stereo disparity calculation block 17, or more generally of the hardware device 13, can be performed between one or more of the above described structure-from-motion calculation on one or more of said the imaging devices 12; the above described calculation of one-dimensional optical flow of captured images on any of the imaging devices; and/or usual stereo disparity calculation of left and right images captured said stereo imaging apparatus 11. In Fig. 7 the general scheme of stereo disparity calculation is shown without reference to a specific hardware implementation.

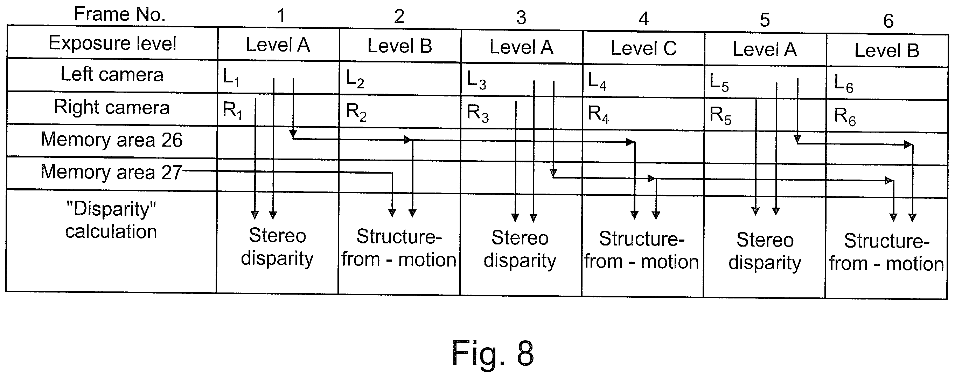

The embodiment according to Figure 2 is particularly advantageous in, but not restricted to, cases where different exposure levels are used in the imaging apparatus 11. This is explained using Figure 8 for a stereo imaging apparatus 11. For example, every second frame may use a first exposure (exposure level A in Fig. 8) that produces images which are used for the stereo disparity calculation. The other exposures (exposure levels B and C in Fig. 8) are not used for the stereo disparity calculation and therefore the hardware device 13 would be idling during these periods. However, these periods may be used advantageously for the structure-from-motion calculation, here of the left camera 12. Therefore, by periodically switching between stereo disparity calculation and structure-from-motion calculation the capacity of the hardware device 13 is fully utilized and no additional dedicated hardware device is required. The structure-from-motion calculation is performed by one and the same dedicated hardware device 13 as the stereo disparity calculation.

This method is now explained in more detail with reference to Fig. 8. For the images in frame No. 1 the stereo disparity calculation is performed and the image of a specific imaging device, here left camera 12a, is stored for example in memory area 26 (see Fig. 2). For the images in frame No. 2 the stereo disparity calculation cannot be performed, so there is time for calculating the structure-from-motion for the current exposure level A frame fetched from memory area 26 and the last-before-current exposure level A frame (two frames before frame no. 1) fetched from the memory area 27. For the images in frame No. 3 the stereo disparity calculation is performed and the image of the left camera 12a is stored in memory area 27, thereby overwriting the old data in memory area 27 which are no longer needed. For the images in frame No. 4 the stereo disparity calculation cannot be performed, so there is time for calculating the structure-from-motion for the current level A frame no. 3 fetched from memory area 27 and the last-before-current level A frame no. 1 fetched from memory area 26. And so on.

From Fig. 8 it is apparent that the terms "N-th frame" and "(N-1)th" frame are not restricted to ultimately subsequent frames and ultimately current and ultimately last-before-current frames, but subsequent, current and last-before-current frames of same exposure level or, more generally, subsequent, current and last-before-current frames used for structure-from-motion calculation.

Similarly to Figure 8, in a mono imaging apparatus, first the one-dimensional optical flow is calculated while the image for exposure state A are captured. During capturing of the image for B exposure, the structure-from-motion is calculated on the last A exposure images.

According to another embodiment, the time between the two frames may be longer when the vehicle drives slower.

## Claims

1. A vision system (10) for a motor vehicle, comprising an imaging apparatus (11) adapted to capture images from a surrounding of the motor vehicle, and a processing unit (30) adapted to perform image processing of images captured by said imaging apparatus (11), **characterized in that** said processing unit (30) is adapted to perform a polar transformation which aligns the epipolar lines to horizontal lines in the captured images, and to perform a structure-from-motion calculation on said transformed images.

2. The vision system as claimed in claim 1, **characterized in that** said structure-from-motion calculation is performed by a correlation search on each line of consecutive transformed images.

3. The vision system as claimed in claim 1 or 2, **characterized in that** the structure-from-motion calculation essentially uses an algorithm for stereo disparity calculation.

4. The vision system as claimed in claim 3, **characterized in that** a disparity map obtained by said stereo disparity calculation is transformed back into a depth image containing structure-from-motion information of the vehicle environment.

5. The vision system as claimed in any one of the preceding claims, **characterized in that** said structure-from-motion calculation is performed in a disparity calculation block (17) of said vision system (10).

6. The vision system as claimed in claim 5, **characterized in that** said disparity calculation block (17) is realized in a dedicated hardware device (13), in particular a Field Programmable Gate Array FPGA, an Application Specific Integrated Circuit ASIC or as part of a System-on-Chip SoC device.

7. The vision system as claimed in any one of the preceding claims, **characterized in that** the processing unit (30) is adapted to detect moving objects, like moving other vehicles, pedestrians, motorcycles or bicycles, in the captured images, and to discard moving objects in the structure-from-motion calculation.

8. The vision system as claimed in any one of the preceding claims, **characterized in that** the processing unit (30) is adapted to monitor a condition of driving straight forward, and to perform the structure-from-motion only if said condition of driving straight forward is met.

9. The vision system as claimed in any one of the preceding claims, wherein said imaging apparatus (11) is a mono imaging apparatus, **characterized in that** said processing unit (30) is adapted to perform time sharing between said structure-from-motion calculation and a calculation of one-dimensional optical flow of captured images.

10. The vision system as claimed in any one of the preceding claims, wherein said imaging apparatus (11) is a stereo imaging apparatus comprising two imaging devices (12), **characterized in that** said processing unit (30) is adapted to perform time sharing between one or more of:
- structure-from-motion calculation on one or more of said the imaging devices (12);
- stereo disparity calculation of images from said imaging devices (12);
- calculation of one-dimensional optical flow of images from any one of the imaging devices (12).

11. The vision system as claimed in any one of the preceding claims, comprising a memory device (25), **characterized in that** images of at least the current time frame and the last before current time frame are stored in said memory device (25).

12. A vision method for a motor vehicle, comprising capturing images from a surrounding of the motor vehicle and performing image processing of captured images, **characterized by** performing a polar transformation which aligns the epipolar lines to horizontal lines in the captured images, and performing a structure-from-motion calculation on said transformed images.
